# EUROPÄISCHE PATENTANMELDUNG

(11) **EP 0 574 640 A1**
(43) Veröffentlichungstag der Anmeldung: **22.12.1993**
(21) Anmeldenummer: 92810465.2
(22) Anmeldetag: 16.06.1992
(51) Int. Cl.: A63C 5/075, F16F 1/36

(54) **Vorrichtung zur Dämpfung von Schwingungen von Skis**

(71) Anmelder: Salomon S.A., F-74370 Metz-Tessy (FR)
(72) Erfinder: Bettosini, Brosi, CH-8613 Uster (CH)
(74) Vertreter: Fischer, Franz Joseph

(57) **Zusammenfassung**

Die Vorrichtung, die zur Dämpfung von Schwingungen von Skis dient, wird zwischen Ski und Skischuh montiert. Sie enthält eine biegesteife Trägerplatte (9) für eine Bindung und eine Schicht (8) aus elastomerem Material als dämpfende Verbindung zwischen Trägerplatte (9) und Ski (2), wobei die Schicht aus elastomerem Material eine Vielzahl durch Zwischenwände voneinander getrennte Kammern (22) aufweist. Die Vorrichtung kann durch zusätzliche Befestigungsmittel schwimmend an der Skioberfläche befestigt werden. Sie bewirkt eine optimale und wirkungsvolle Dämpfung von Schwindungen aller Art, die bei Skis auftreten können. Dabei wird das Fahrvergnügen beim Skifahren erhöht,
indem der Bodenkontakt der Skis verbessert und die Laufruhe der Skis erhöht wird.

## Beschreibung

Die vorliegende Erfindung bezieht sich auf eine Vorrichtung zur Dämpfung von Schwingungen von Skis zur Montage zwischen Ski und Skischuh, enthaltend eine biegesteife Trägerplatte für die Bindung und eine Schicht aus elastomerem Material als dämpfende Verbindung zwischen Trägerplatte und Ski wobei die Schicht aus elastomerem Material eine Vielzahl von, durch Zwischenwände voneinander getrennte, Kammern aufweist. Die Vorrichtung vermindert einerseits die Eigenschwingungen der Skis und ihr Vibrieren während der Fahrt, andererseits werden die Schläge, die von Bodenunebenheiten herrühren und auf die Wirbelsäule des Skifahrers übertragen werden, gedämpft. Die Vorrichtung verhilft dem Skifahrer zu einer weniger ermüdenden sichereren Fahrweise und trägt somit zu einer Verminderung der Unfälle bei.

In der EP-A-0'104'185 und in der parallelen CH-A-671'887 ist das unter dem Warenzeichen "DERBYFLEX" bekannte Dämpfungselement beschrieben. Dieses zurüstbare Produkt hat nach anfänglicher Skepsis in den letzten Jahren im alpinen Skirennsport einen grossen Anklang gefunden; kaum ein Rennfahrer will bei den häufig auf pickelharten Pisten ausgetragenen Wettkämpfen darauf verzichten. Durch die optimale und wirkungsvolle Dämpfung von Schwingungen aller Art, die bei Skis auftreten können, wird der Bodenkontakt der Skis verbessert und die Laufruhe der Skis erhöht. Gleichzeitig behalten die Skis ihre unverfälschten Biegeeigenschaften, was eine optimale Kurvenfahrt ermöglicht. Das Produkt ist jedoch auch für durchschnittliche Skifahrer geeignet, da das Fahrvergnügen wesentlich gesteigert wird, wobei gleichzeitig eine Verminderung der Ermüdung bewirkt wird. Ein Nachteil des bekannten Dämpfungselementes war sein verhältnismässig hohes Gewicht, welches in erster Linie von der 8 mm dicken Gummischicht und in zweiter Linie von der 4 mm starken Leichtmetallplatte herrührte. Die Masse der Gummischicht war erforderlich, um die erwünschte Dämpfung zu erzielen, während die Trägerplatte aus Leichtmetall eine genügende Dicke aufweisen musste, um eine sichere Verankerung der Bindung zu erlaubten. Das hohe Gewicht des Dämpfungselementes, insbesondere der Schicht aus elastomerem Material, war für die Verbesserung der Fahreigenschaften der Skis erforderlich, beinträchtigte jedoch die Handlichkeit von damit ausgerüsteten Skis. Dieser Umstand konnte den Durchschnittsskifahrer abschrecken, seine Skis mit Dämpfungselementen zu versehen.

Es war demzufolge Aufgabe der vorliegenden Erfindung, eine Dämpfungsvorrichtung für Skis zur Verfügung zu stellen, welche die Wirkung des oben beschriebenen Dämpfungselementes aufweisen, jedoch frei vom Nachteil des hohen Gewichtes sind.

Es wurde gefunden, dass eine Dämpfungsvorrichtung mit einer Elastomerschicht, die eine Vielzahl von Kammern aufweist, die Schwingungen mindestens in gleicher Weise wie eine anloge Vorrichtung ohne Kammern dämpfen kann. Durch die Kammern wird das Gewicht vermindert, wobei die eingeschlossene Luft zur Dämpfung beiträgt.

Gegenstand der vorliegenden Erfindung ist demzufolge eine Vorrichtung zur Dämpfung von Schwingungen von Skis, zur Montage zwischen Ski und Skischuh, enthaltend eine biegesteife Trägerplatte für die Bindung und eine Schicht aus elastomerem Material als dämpfende Verbindung zwischen Trägerplatte und Ski, die dadurch gekennzeichnet ist, dass die Schicht aus elastomerem Material eine Vielzahl durch Zwischenwände voneinander getrennte Kammern aufweist.

Die elastomere Schicht ist in der vorliegenden Erfindung eine Schicht aus gummielastischem Material, welches im Innern Hohlräume enthält. Diese Hohlräume sind vorzugsweise mit Gas gefüllt. Die Hohlräume dienen in erster Line dazu, das Dämpfungselement leichter zu machen. In zweiter Linie muss die dämpfende Wirkung erhalten, bzw. optimiert werden. Die Kammern nehmen vorzugsweise 40 - 60 % des Volumens der gesamten Elastomerschicht ein. Die Elastomerschicht ist durch einen Klebstoff an die Trägerplatte geklebt. Damit diese Klebung dauerhaft ist, muss das gummielastische Material an der Klebestelle kompakt sein. Die Kammern sind in der Elastomerschicht regelmässig angeordnet, wobei ihre Ausgestaltung von der gewünschten Wirkung abhängig ist. Die Bildung der Kammern wird dadurch erreicht, dass eine elastomere Schicht mit wabenartigen Vertiefungen hergestellt wird. Diese Vertiefungen besitzen einen geschlossenen Boden, welcher gleichzeitig die dem Ski zugewandte Fläche der Elastomerschicht bildet. An dieser Fläche wird auf der unteren Seite ein Haftkleber aufgetragen, welcher die Verbindung mit dem Ski herstellt. Dieser Haftkleber ist vorzugsweise in eine Nut auf der unteren Seite der dämpfenden Elastomerschicht aufgetragen, damit die Haftkleberschicht eine definierte Dicke (z.B 1 mm) einnehmen kann. Die wabenförmigen Vertiefungen werden abgeschlossen, indem die Elastomerschicht auf ihrer oberen Seite mit einer Trägerplatte verklebt wird, derart, dass aus den wabenförmigen Vertiefungen geschlossene Zellen oder Kammern entstehen. Hierzu ist erforderlich, dass die Zwischenwände zwischen den Vertiefungen von genügender Stärke sind, damit die zur Verklebung zur Verfügung stehende Fläche für eine ausreichende Adhäsion gross genug ist. Vorzugsweise liegt die Anzahl der Zellen oder Kammern im Bereich zwischen 80 und 200. Die Dicke der elastomeren Schicht beträgt vorzugsweise 8 mm. Die Tiefe der Vertiefungen zur Bildung der Zellen liegt im Bereich zwischen 4 - 6 mm. Die Zellen können ebenfalls gebildet werden, indem eine Anzahl mit einem Gas gefüllte Hohlkörper in die Elastomerschicht eingearbeitet wird.

Die Dämpfungsvorrichtung, welche mindestens eine elastomere Schicht und eine Trägerplatte enthält, dient zum Aufkleben auf den Ski. Hierzu dienen Haftklebstoffe, d.h. dauerklebrige Stoffe, die in lösungsmittelfreier oder dispergiermittelfreier Form an den meisten Werkstoffoberflächen schon bei leichtem Druck spontan haften. Dabei ist wichtig, dass der Haftklebstoff während seiner Lebensdauer dauerelastisch bleibt. Zur Aufnahme dieses Haftklebstoffes ist die gummielastische Schicht mit mindestens einer Nut oder Aussparung versehen, deren Tiefe der erforderlichen Klebstoffdicke entspricht. Ist der Klebstoff einmal aufgetragen, kann dieser durch ein anti-adhäsiv ausgerüstetes Material wie beispielsweise durch Silikonpapier oder eine silikonisierte Polyethylenfolie, abgedeckt werden. Diese Abdeckschicht wird bei der Montage der Dämpfungsvorrichtung abgezogen und die Dämpfungsvorrichtung kann auf der vorgesehenen Stelle angeklebt werden. Als Haftklebestoffe kommen solche in Frage, die in einem Temperaturbereich von -80° bis +60° dauerelastisch sind. Die Auftragsdicke des Klebstoffes kann 0,5 bis 1,5 mm und vorzugsweise 1 mm betragen. Als Haftklebstoffe kommen beispielsweise solche auf Basis von natürlichen oder synthetischen Kautschukarten in Verbindung mit modifizierten Naturharzen, Phenolformaldehydharzen oder Kohlenwasserstoffharzen in Frage. Anstelle von Kautschuk können auch Polyacrylsäureester, Polymethacrylsäureester, Polyvinyläther- und Polyisobutylenverbindungen verwendet werden.

Das erfindungsgemässe Dämpfungselement wird bevorzugt auf einer oder beiden Seiten durch geeignete Mittel schwimmend mit dem Ski verbunden. Zur besseren Kraftübertragung kann eine Seite der Dämpfungsvorrichtung, vorzugsweise am Fersenteil, fest mit dem Ski verbunden werden. Der Längenausgleich bei der Biegung erfolgt dann durch den schwimmend gelagerten vorderen Teil, welcher vorzugsweise der auf die Skioberfläche heruntergezogene Vorderteil der Trägerplatte ist. Dieser Vorderteil weist in Längsrichtung bezüglich der Skis ausgerichtete Längsschlitze auf, welche zur Aufnahme von Montagemitteln dienen, welche im Ski verankert werden. Bei der Biegung des Skis erfolgt ein Längenausgleich, wobei sich die Befestigungsmittel innerhalb der Längsschlitze nach vorne oder hinten bewegen können. Vorzugsweise enthalten diese Längsschlitze ein Dämpfungsmaterial, welches zusätzlich zur Schicht aus elastomerem Material für die Schwingungsdämfpfungen sorgen. Der Vorderteil der Vorrichtung ist vorzugsweise mit einer Gleiterplatte abgedeckt, welche unmittelbar in Umgebung einer Montageschraube in die längliche Öffnung eingreift und zusammen mit elastomeren Einlagen für einen gedämpften Längenausgleich sorgt.

Die Lagerung der Dämpfungsvorrichtung kann aber auch auf andere Weise erfolgen. Beispielsweise indem der Ski bei der Herstellung im Teil vor der Bindung mit einer taschenartigen Öffnung versehen wird, welche einen Gummipuffer aufweist. Bei einem so ausgestalteten Ski, kann die Dämpfungsvorrichtung mit dem Frontteil in die mit einer Gummidämpfung versehenen Tasche eingeschoben werden und am hinteren Teil fest mit dem Ski verbunden werden. Es ist jedoch auch möglich, den vorderen und hinteren Teil der Schwingungsdämpfungsvorrichtung mit Kappen zu versehen, welche als Kupplungselemente zwischen Ski und Dämpfungsvorrichtung dienen, in welchen die biegesteife Trägerplatte schwimmend gelagert ist.

Es ist ebenfalls möglich, dass Dämpfungselement lediglich durch Aufkleben an den Ski zu befestigen. Dies setzt jedoch voraus, dass die Elastomerschicht und die Klebeverbindungen genügend stabil sind. Obschon machbar, werden aus Sicherheitsgründen Ausführungsformen bevorzugt, welche eine zusätzliche Lagerung und/oder Befestigung aufweisen.

Als Material für die biegesteife Trägerplatte kommt vorzugsweise eine Leichtmetallegierung, wie beispielsweise Titanal, in Frage. Es können jedoch noch andere Metalle eingesetzt werden, wobei für die Auswahl Faktoren wie Kosten, Stabilität und Gewicht eine Rolle spielen. Für die Trägerplatte können auch Kunststoffmaterialien verwendet werden, welche die Stabilitätsbedingungen im Temperaturbereich von -50° bis +40° erfüllen.

Die Schwingungsdämpfungsvorrichtung wird vorzugsweise mit einer integrierten Bindung versehen. Dies kann dadurch geschehen, dass in die Trägerplatte Haltevorrichtungen wie Schienen und ähnliches eingearbeitet werden. Dadurch kann wiederum Gewicht eingespart werden. Bei genügend langen Verstellmöglichkeiten für einen Norm-Bindungskopf und einen Norm-Fersenautomaten ergibt sich der Vorteil, dass keine individuellen Montagelöcher für unterschiedliche Schuhgrössen oder Bindungstypen gebohrt werden müssen. Mit Dämpfungsvorrichtungen kombinierte Bindungen und/oder Skis könnten bereits von der Fabrik an die Verkaufsstellen geliefert werden, wobei für die Anpassung der Skischuhe nur noch die Länge, die korrekte Stellung des Schuhmittelpunktes und die korrekte Auslösekraft eingestellt werden müssen.

Nachstehend wird die Erfindung anhand der beiliegenden Figuren näher erläutert.
Fig. 1 zeigt die Seitenansicht eines mit einer Dämpfungsvorrichtung versehenen Skis,
Fig. 2. zeigt eine perspektivische Darstellung einer erfindungsgemässen Dämpfungsvorrichtung, wobei die Trägerplatte unterbrochen ist, damit die im dämpfenden elastomeren Material vorhandenen Kammern sichtbar sind.
Fig. 3 ist ein Längsschnitt entlang der Linie III-III von Fig. 2,
Fig. 4 stellt eine perspektivische Teilansicht des Vorderteils der Dämpfungsvorrichtung dar,

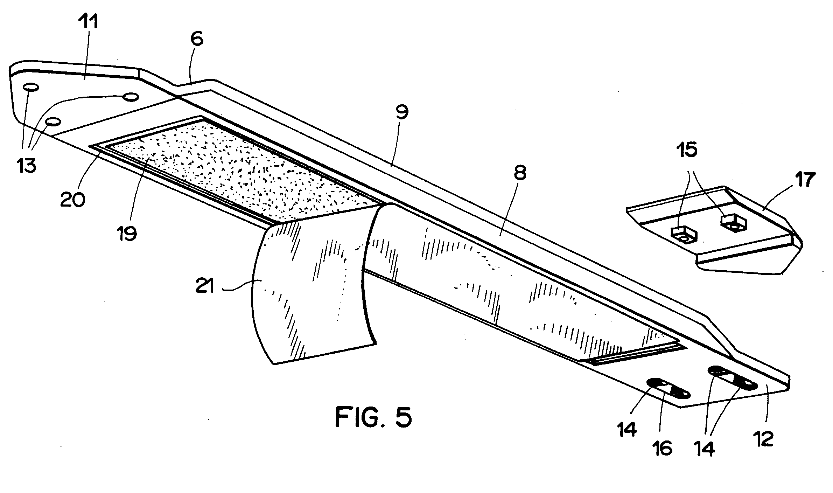

Fig. 5 zeigt eine perspektivische Ansicht der Dämpfungsvorrichtung von unten, wobei die Klebstoffschicht einschliesslich der Schutzfolie sichtbar ist.
Fig. 6 zeigt einen Schnitt durch einen mit einer Dämpfungsvorrichtung versehenen Ski und die
Fig. 7 und 8 stellen ebenfalls Querschnitte von mit Dämpfungsvorrichtungen versehenen Skis dar; die Trägerplatte der Dämpfungsvorrichtung weist integrierte Befestigungsmittel für Skibindungen auf.

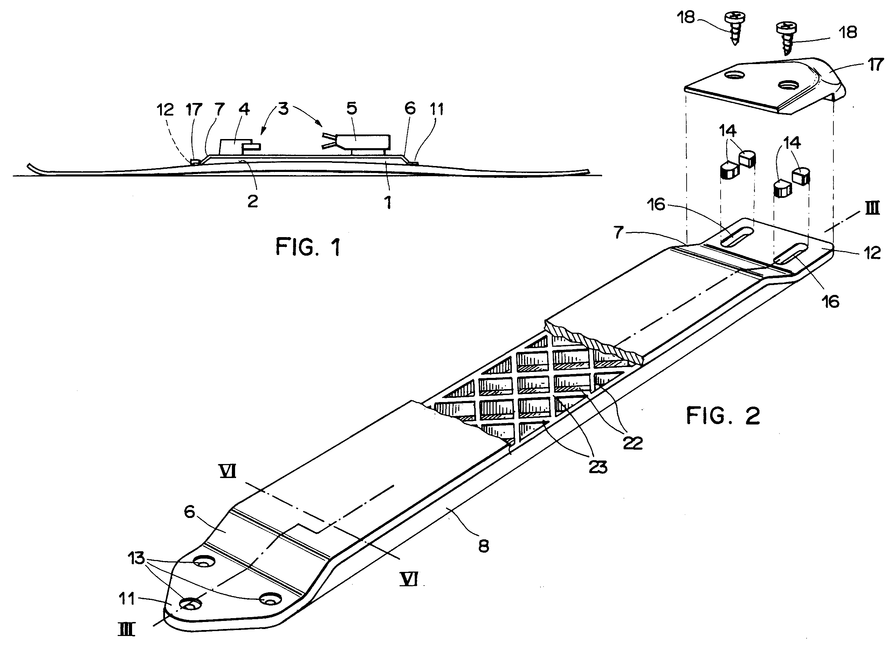

Fig. 1 zeigt eine Dämpfungsvorrichtung 1, die auf einen Ski 2 montiert ist. Auf die Dämpfungsvorrichtung ist eine Bindung 3 montiert, wobei ihr Frontteil 4 und ihr Fersenteil 5 allein von einer Trägerplatte 9 getragen werden. Die Trägerplatte ist am hinteren Ende 6, 11 mit dem Ski starr verbunden, während sie am vorderen Ende bei einer Gleiterkappe 17 schwimmend gelagert ist.

Fig. 2 zeigt Einzelheiten der erfindungsgemässen Dämpfungsvorrichtung. Auf der Elastomerschicht 8 ist die Metallplatte 9 angeordnet, die hinten und vorne die abgekröpften Teile 6 und 7 aufweist. Diese Teile gehen in die Endstücke 11 und 12 über, welche zur direkten Auflage auf den Ski vorgesehen sind. Das Endstück 11 weist die Bohrungen 13 auf, welche zur festen Montage am Ski dienen. Das vordere Ende 12 besitzt ovale Öffnungen 16 für die Schrauben 18. Die länglichen Öffnungen 16 dienen dazu, dass sich das vordere Ende 12 bezüglich den Schrauben 18 bewegen kann, wenn der Ski einer Biegung unterworfen wird. Durch die Schrauben 18 wird die Gleiterkappe 17 auf das vordere Ende 12 aufgedrückt. Durch diese Anordnung werden Bewegungen des Endstückes 12 in seitlicher und vertikaler Richtung verhindert, während die gewünschte Bewegung in der Längsrichtung möglich ist. Durch das Zusammenspiel der gummielastischen Teile 14 und dem in das Loch 16 eingreifenden Führungsstück 15 führt die vorgesehene Anordnung zu einer zusätzlichen Dämpfungswirkung. Unter der biegesteifen Trägerplatte 9, die vorzugsweise aus einer stabilen Leichtmetalllegierung wie Titanal besteht, ist die elastomere Unterlage 8 angeordnet. Diese besitzt eine Dicke von 5 - 10 mm, vorzugsweise 8 mm. Die Elastomerschicht 8 weist erfindungsgemäss eine Vielzahl, vorzugsweise ca. 150 Kammern 22 auf. Diese Kammern sind durch die Seitenwände 23 voneinander abgetrennt. Ebenso sind die Kammern auf ihrer dem Ski zugewandten Seite abgeschlossen. Der obere Abschluss der Kammer wird durch die biegesteife Trägerplatte 9 gebildet, welche fest auf die nach oben gerichteten Flächen der Zwischenwände 23 geklebt wird. Durch diese Klebungen werden die Zellen luftdicht abgeschlossen.

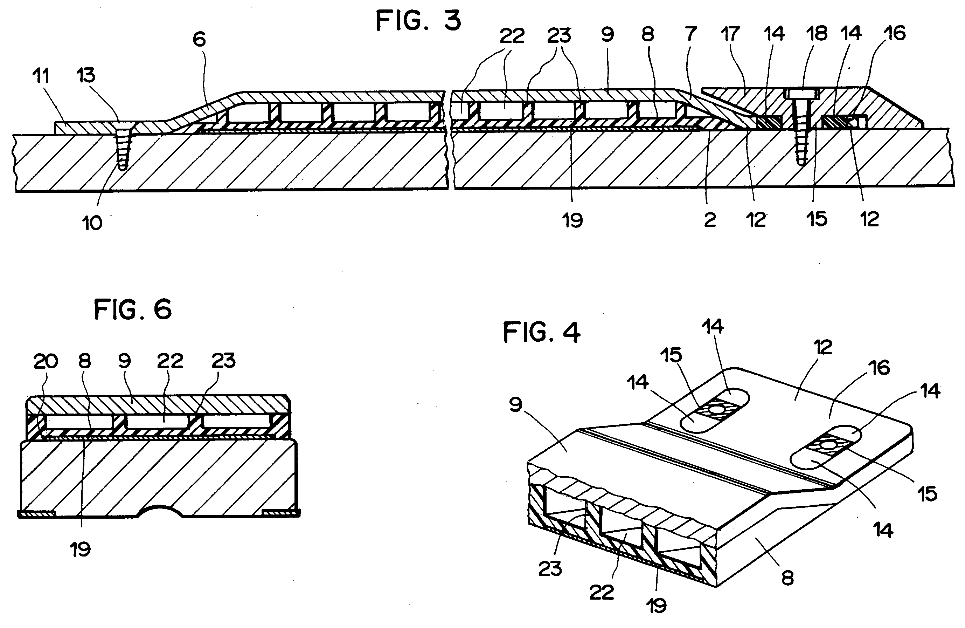

Fig. 3 zeigt einen Längsschnitt durch die erfindungsgemässe Dämpfungsvorrichtung, die mittels der Schrauben 10 und 18 auf die Skioberfläche 2 montiert ist. Das hintere Endstück 11 der Metallplatte 9 ist durch die Schrauben 10, welche durch die Bohrungen 13 durchgehen, mit dem Ski fest verbunden. Unter der Platte 9, zwischen den Verkröpfungen 6 und 7, ist die Elastomerschicht 8 angeordnet. Diese weist die Kammern 22 mit den Zwischenwänden 23 auf, welche durch die Trägerplatte 9 geschlossen werden. Auf der Unterseite der Elastomerschicht ist mindestens eine Nut oder Ausnehmung 20 zur Aufnahme des Haftklebers vorhanden. Die Schichtdicke des Klebers 19 entspricht der Tiefe der Nut 20. Vorzugsweise liegt die Schichtdicke des Klebers 19 wenig über der Ausnehmung 20 und passt sich nach der Montage durch die plastischen Eigenschaften des Haftklebers genau an. Das vordere Endstück 12 liegt direkt auf dem Ski auf. Alternativ kann auch eine Teflonschicht zwischen dem Endstück 12 und der Skioberfläche 12 angeordnet sein. Im Längsschnitt ist ebenfalls die Öffnung 16 ersichtlich, welche durch die Dämpfungsstücke 14 und die Führungsstücke 15 ausgefüllt ist. Über dem Endstück 12 ist die Gleiterkappe 17 angeordnet, welche mittels der Schraube 18 durch das Führungsstück 15 mit dem Ski verbunden ist. Durch die Anordnung ist die Schraube 18, der Befestigungs- und Führungsteil 17 (Gleiterkappe) mit dem integrierten Führungsstück 15 fest mit dem Ski verbunden. Wird nun der Ski durchgebogen, bewegt sich das vordere Ende bezüglich der auf dem Ski befestigten Schraube in Längsrichtung, wobei die Bewegung zusätzlich durch die gummielastischen Teile 14 gedämpft wird.

Fig. 4 zeigt das vordere Endstück 12 in perspektischer Darstellung, wobei die Anordnung der zur Gleiterkappe 17 gehörenden Führungsstücke 15 und der Dämpfungseinlagen 14 ersichtlich sind. Die Führungsstücke 15 sind nun in Längsrichtung gedämpft beweglich. Im weiteren sind in der Elastomerschicht 8 die Zellen 22 mit den Zwischenwänden 23 sichtbar, wobei die Zellen nach unten abgeschlossen sind. Unter den Zellen 22 ist die Haftkleberschicht 19 aufgetragen.

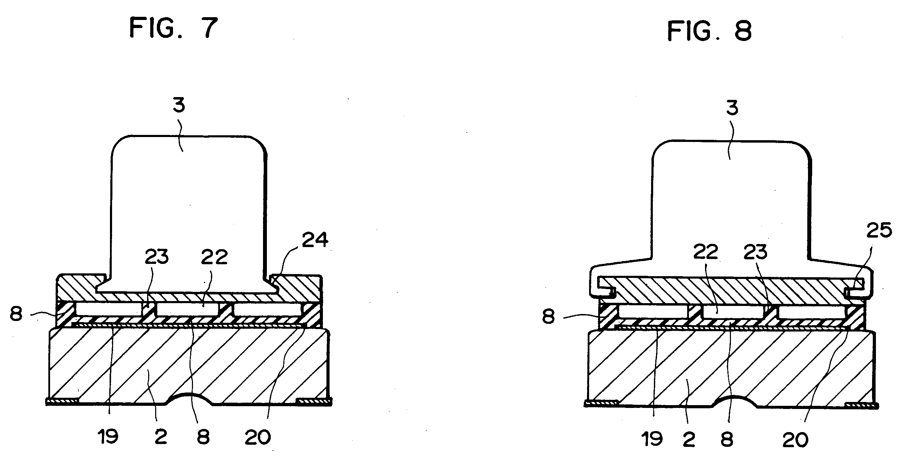

Fig. 6 zeigt die erfindungsgemässe Dämpfungsvorrichtung in perspektivischer Darstellung von unten gesehen. Es ist eine bevorzugte Anordnung der Haftkleberauftragung ersichtlich. Der Haftkleber 19 befindet sich in einer einzigen in Längsrichtung ausgerichteten Nut 20. Ihre Tiefe entspricht der gewünschten Schichtdicke des Haftklebers 19, welche vorzugsweise ca. 1 mm beträgt. Der Haftkleber wird bei der Fabrikation bereits in die Nut aufgetragen und mit einem anti-adhäsiv ausgerüsteten Abdeckband 21 abgedeckt. Vor der Montage des Dämpfungselementes werden die Abdeckbänder 21 entfernt, damit der Haftkleber auf der gereinigten Skioberfläche haften kann.

Die Fig. 7 und 8 zeigen analoge Abbildungen wie Fig. 6, wobei in Fig. 7 eine in der biegesteifen Trägerplatte integrierte Befestigungsschiene 24 für die Bindung 3 vorgesehen ist. Gemäss Fig. 8 sind für die Bindung 3 Befestigungsnuten 25 vorgesehen.

Mittels der Figuren wurde eine bevorzugte Ausführungsform beschrieben, die jedoch, ohne das vom Erfindungsgedanken und von der Definition der Patentansprüche abgewichen wird, abgewandelt werden kann.

## Patentansprüche

1. Vorrichtung zur Dämpfung von Schwingungen von Skis, zur Montage zwischen Ski und Skischuh, enthaltend eine biegesteife Trägerplatte (9) für die Bindung und eine Schicht (8) aus elastomerem Material als dämpfende Verbindung zwischen Trägerplatte (9) und Ski (2), dadurch gekennzeichnet, dass die Schicht (8) aus elastomerem Material eine Vielzahl durch Zwischenwände (23) voneinander getrennte Kammern (22) aufweist.

2. Vorrichtung gemäss Anspruch 1, dadurch gekennzeichnet, dass die Wandstärke der Zwischenwände (23) zwischen den Kammern (22) 3 bis 12 mm beträgt.

3. Vorrichtung nach Anspruch 1 oder 2 dadurch gekennzeichnet, dass die Kammern (22) gegen die biegesteife Trägerplatte (9) offen sind.

4. Vorrichtung gemäss einem der Ansprüche 1 bis 3 dadurch gekennzeichnet, dass die Schicht (8) aus elastomerem Material mit der biegesteifen Trägerplatte (9) verklebt ist.

5. Vorrichtung nach Anspruch 3 und 4, dadurch gekennzeichnet, dass die Kammern (22) in der Schicht aus elastomerem Material durch die biegesteife Trägerschicht (9) gasdicht abgeschlossen werden, damit das eingeschlossene Gas zur Dämpfung beitragen kann.

6. Vorrichtung gemäss einem der Ansprüche 1 bis 5, dadurch gekennzeichnet, dass die Kammern (22) in der elastomeren Schicht regelmässig, vorzugsweise wabenförmig angeordnet sind.

7. Vorrichtung gemäss einem der Ansprüche 1 bis 6, dadurch gekennzeichnet, dass die elastomere Schicht (8) 50 bis 200 Kammern (22) aufweist und dass 40 - 60 % des Volumens dieser Schicht aus dem durch die Kammern gebildeten Hohlraum besteht.

8. Vorrichtung nach einem der Ansprüche 1 bis 7, dadurch gekennzeichnet, dass die elastomere Schicht (8) an der der biegesteifen Trägerplatte (9) entgegengesetzten Seite mindestens eine Nut (20) aufweist, die eine Schicht (19) aus einem dauerelastischen Haftkleber zur Befestigung an der Skioberfläche enthält.

9. Vorrichtung nach einem der Ansprüche 1 bis 8, dadurch gekennzeichnet, dass die biegesteife Trägerplatte (9) am vorderen und hinteren Ende abgekröpft ist und über die elastomere Schicht hinaus ragt, wobei die der Skioberfläche zugewandte Fläche der Trägerplatte endständig mit der der Trägerplatte abgewandten Fläche der elastomeren Schicht bündig ist.

10. Vorrichtung nach einem der Ansprüche 1 bis 9, dadurch gekennzeichnet, dass die endständigen an die Abkröpfungen (6, 7) angrenzenden Teile (11, 12) der Trägerplatte Bohrungen (13) oder Ausnehmungen (16) zur Montage am Ski aufweisen.

11. Vorrichtung nach Anspruch 9 oder 10, dadurch gekennzeichnet, dass mindestens eines der endständigen Teile (11, 12) derart ausgebildet ist, dass das Teil im montierten Zustand bezüglich dem Ski eine gegebenenfalls gedämpfte Längsbewegung durchführen kann, wenn der Ski gebogen wird, damit die dem Ski eigene Biegelinie nicht beeinflusst wird.

12. Vorrichtung nach Anspruch 11, dadurch gekennzeichnet, dass mindestens eines der endständigen Teile (11, 12) längliche Ausnehmungen (16) zur Aufnahme von Montageschrauben aufweist, damit das endständige Teil bezüglich von in einem Ski montierten Schrauben (18) begrenzte gegebenenfalls gedämpfte Längsbewegungen ausführen kann.

13. Vorrichtung gemäss einem der Ansprüche 9 bis 11 dadurch gekennzeichnet, dass eines der endständigen Teile (11, 12), vorzugsweise das hintere bezüglich der Fahrrichtung des Skis, derart ausgebildet ist, dass dieses Teil fest an die Oberfläche des Skis montiert werden kann.

14. Vorrichtung gemäss Anspruch 12 oder 13, dadurch gekennzeichnet, dass in jeder der länglichen Ausnehmungen (16) auf zwei Seiten der vorgesehenen Lage einer Montageschraube Einsätze (14) aus einem elastomerem Material angeordnet sind, welche Bewegungen des betreffenden endständigen Teils bezüglich des Skis dämpfen.

15. Vorrichtung gemäss einem der Ansprüche 1 bis 9, dadurch gekennzeichnet, dass mindestens eines der endständigen Teile (11, 12) der Trägerplatte (9) in einer am Ski zu befestigenden Gleiterkappe schwimmend gelagert ist.

16. Vorrichtung gemäss einem der Ansprüche 1 bis 15, dadurch gekennzeichnet, dass die biegesteife Trägerplatte (9) aus Kunststoff oder Metall besteht und eine Dicke von 3 bis 5 mm aufweist

17. Vorrichtung gemäss einem der Ansprüche 1 bis 16, dadurch gekennzeichnet, dass die elastomere Schicht (8) eine Dicke von 5 bis 12 mm, vorzugsweise von 8 mm aufweist.

18. Vorrichtung gemäss einem der Ansprüche 8 bis 17, dadurch gekennzeichnet, dass der Haftkleber (19) in einer einzigen Schicht, die sich im wesentlichen in der gesamten Länge der elastomeren Schicht ausdehnt, in einer Dicke von 0,5 bis 1,5 mm und einer Breite von 30 bis 40 mm aufgetragen ist.

19. Vorrichtung gemäss einem der Ansprüche 1 bis 18, dadurch gekennzeichnet, dass die biegesteife Trägerplatte Befestigungsmittel, z. B. Montageschienen (24), für die Montage von Skibindungskomponenten (3) aufweist, derart, das die Bindung auf jede gängige Schuhgrösse eingestellt und die Mitte des Skischuhes leicht in die gewollte Position gebracht werden kann.

20. Skibindung, dadurch gekennzeichnet, dass sie eine Vorrichtung nach Anspruch 19 integriert enthält.

21. Ski, dadurch gekennzeichnet, dass er eine Vorrichtung nach einem der Ansprüche 1 bis 18 oder eine Skibindung nach Anspruch 18 aufweist.
